# DEMANDE DE BREVET EUROPEEN

(11) **EP 1 712 449 A1**
(43) Date de publication de la demande: **18.10.2006**
(21) Numéro de dépôt: 06300269.5
(22) Date de dépôt: 23.03.2006
(51) Int. Cl.: B62D 17/00, B62D 7/15

(54) **Procédé de contrôle de l'angle de carrossage des roues arrière d'un véhicule automobile et dispositif de mise en oeuvre**

(30) Priorité: 12.04.2005 FR 0503629
(71) Demandeur: Renault s.a.s., 92100 Boulogne Billancourt (FR)
(72) Inventeur: Planelles, Mickaël, 78114, Magny les Hameaux (FR); Bouet, Christophe, 92370, Chaville (FR); Auvinet, Jannick, 27000, Evreux (FR); Portaz, Chritstophe, 92370, Chaville (FR)

(57) **Abrégé**

L'invention concerne un procédé de contrôle de l'angle de carrossage des roues arrière d'un véhicule automobile équipé d'au moins quatre roues, deux roues directrices (Rₐᵥ) étant montées sur l'essieu avant et en ce qu'il est réalisé en boucle ouverte à l'aide d'une cartographie dépendant au moins des valeurs instantanées de la vitesse longitudinale du véhicule et de l'angle du volant représentatif du braquage des roues avant et en ce que les roues de l'essieu arrière (Rₐᵣ) sont carrossées en parallèle, soit une des roues est carrossée positivement en même temps que l'autre roue est carrossée négativement.

## Description

L'invention concerne un procédé de contrôle actif de l'angle de carrossage des roues arrière d'un véhicule automobile, réalisé en boucle ouverte à partir de certaines caractéristiques dynamiques du véhicule, telles que sa vitesse longitudinale. Il concerne également un dispositif de mise en oeuvre dudit procédé.

Lors du design d'un véhicule, le choix du rapport de démultiplication de la direction est le fruit du compromis entre deux contraintes, d'une part la maniabilité du véhicule à basse vitesse et d'autre part sa stabilité à haute vitesse, l'action du conducteur sur le volant ne devant pas avoir le même effet lors de manoeuvres à basse vitesse, pour se garer par exemple, et lors de dépassements sur l'autoroute. Actuellement, ce compromis est résolu par le biais du braquage actif des roues avant ou des roues arrière.

Pour résoudre ce problème, l'invention propose un procédé de carrossage actif des roues arrière comme fonction de châssis, au sens de degré de liberté pilotable sur le châssis, tel que les braquages des roues avant, arrière ou autres.

Pour cela, un premier objet de l'invention est un procédé de contrôle de l'angle de carrossage des roues arrière d'un véhicule automobile, équipé de deux roues directrices montées sur l'essieu avant, caractérisé en ce qu'il est réalisé en boucle ouverte à l'aide d'une cartographie dépendant au moins des valeurs instantanées de la vitesse longitudinale du véhicule et de l'angle du volant représentatif du braquage des roues avant.

Selon une caractéristique de l'invention, les roues de l'essieu arrière sont carrossées en parallèle, c'est-à-dire qu'une des deux roues est en carrossage positif lorsque l'autre est en carrossage négatif.

Selon une caractéristique du procédé de contrôle, dans une plage de vitesses longitudinales du véhicule inférieures à un seuil défini correspondant à une conduite à basse vitesse, il consiste en un carrossage des roues arrière en opposition de phase avec le braquage des roues avant, réduisant ainsi le rayon de braquage du véhicule et générant un couple maximal aux roues.

Selon une autre caractéristique du procédé, pour une vitesse longitudinale du véhicule supérieure à un seuil prédéfini, il consiste en un carrossage des roues arrière en phase avec le braquage des deux roues avant, stabilisant ainsi le véhicule en dynamique.

Un second objet de l'invention est un dispositif de mise en oeuvre du procédé de contrôle, caractérisé en ce qu'il est embarqué sur le véhicule et comprend un calculateur électronique de contrôle, qui reçoit des informations sur le braquage des roues directrices avant d'une part, par l'intermédiaire de l'angle au volant, et sur la vitesse longitudinale du véhicule d'autre part, délivrées par des capteurs existants, qui a en mémoire une cartographie de l'angle à plusieurs dimensions en fonction de paramètres de l'évolution dynamique du véhicule et qui pilote un actionneur des roues arrière à l'aide d'une consigne extraite de ladite cartographie mémorisée.

Ce procédé de contrôle actif est destiné à améliorer le comportement du véhicule à basse vitesse, en augmentant sa maniabilité en manoeuvres notamment, et à haute vitesse en assurant sa stabilité et le confort des passagers en virages notamment.

D'autres caractéristiques et avantages de l'invention apparaîtront à la lecture de la description concernant un véhicule automobile à quatre roues, illustrée par les figures suivantes qui sont :
- les figures 1a et 2a : deux vues schématiques de dessus de la position des roues d'un véhicule automobile en virage respectivement à basse vitesse et à haute vitesse ;
- les figures 1b et 2b : deux vues schématiques arrière de la position des roues d'un véhicule automobile en virage respectivement à basse vitesse et à haute vitesse ;
- la figure 3 : un exemple de cartographie du carrossage des roues arrière d'un véhicule en fonction de sa vitesse et de l'angle au volant ;
- la figure 4 : un schéma simplifié d'un dispositif de mise en oeuvre du procédé de carrossage actif selon l'invention.

Selon l'invention, le procédé de contrôle de l'angle de carrossage des roues arrière d'un véhicule automobile A est un procédé actif, réalisé en boucle ouverte en fonction de caractéristiques dynamiques du véhicule, en particulier de la vitesse longitudinale du véhicule et de l'angle au volant. De plus, les roues arrière sont carrossées en parallèle, autrement dit quand une des deux roues arrière est carrossée positivement, la seconde est carrossée négativement pour générer le maximum d'effort aux roues, le carrossage d'une roue étant l'angle que fait le plan de la roue avec la verticale à la route.

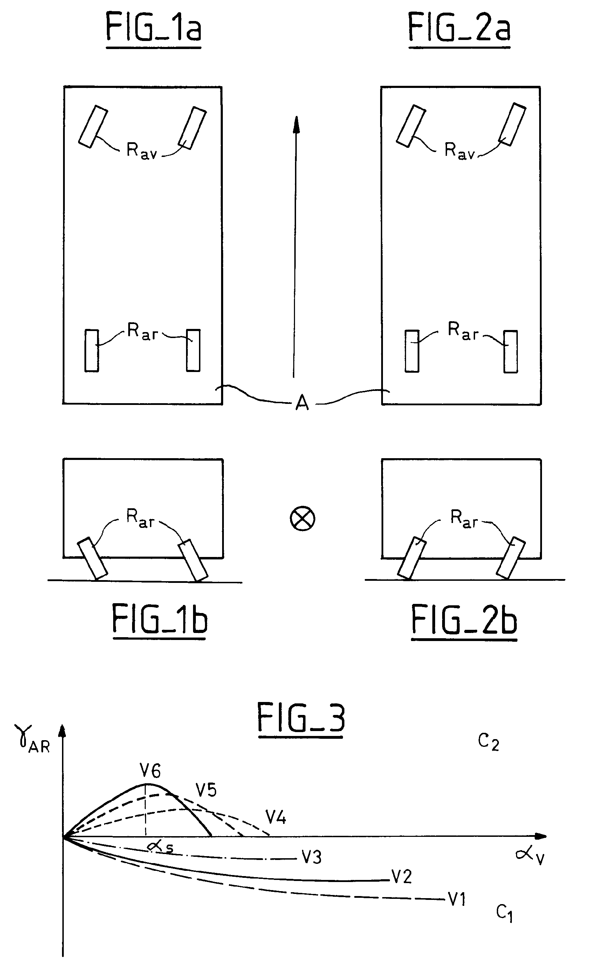

Dans une première plage de vitesses longitudinales inférieures à un seuil défini correspondant à une conduite à basse vitesse, en dessous de 70 Km/h par exemple, le procédé consiste, lors du braquage des roues avant Rₐᵥ, en un carrossage des roues arrière Rₐᵣ destiné à générer un couple maximal au véhicule, donc en un carrossage en opposition de phase par rapport au braquage des roues avant. Autrement dit, pour un braquage des roues avant positif vers la droite, la roue arrière intérieure au virage à droite, c'est-à-dire la droite, est carrossée négativement pendant que la roue arrière extérieure, donc la gauche, est carrossée positivement, comme le montrent les vues de dessus de la figure 1a et arrière de la figure 1b, le sens de déplacement du véhicule étant symbolisé par une flèche. Ainsi, le rayon de braquage du véhicule est réduit car le centre instantané de rotation se rapproche du véhicule.

De plus, le procédé agit selon deux caractéristiques essentielles. Premièrement, à vitesse longitudinale Vₓ du véhicule fixée, l'angle de carrossage arrière γ_{AR} croît, en valeur absolue en même temps que l'angle au volant αᵥ imposé par le conducteur du véhicule, de telle sorte que, plus le conducteur applique un angle au volant important, en manoeuvre ou en virage à basse vitesse, plus le procédé carrosse les roues pour réduire le rayon de braquage du véhicule.

Deuxièmement, alors que l'angle au volant αᵥ est fixé, la valeur absolue de l'angle de carrossage arrière γ_{AR} diminue lorsque la vitesse Vₓ longitudinale augmente, afin de limiter la vivacité du véhicule à moyenne vitesse.

Les deux caractéristiques de l'angle de carrossage arrière γ_{AR} apparaissent sur la figure 3, représentant sa variation en fonction de l'angle volant αᵥ pour trois valeurs différentes de la vitesse Vₓ du véhicule, V₁, V₂ et V₃ dans le sens des valeurs croissantes, dans le cadran C₁ correspondant à un braquage des roues avant et un carrossage des roues arrière en opposition de phase.

Grâce au procédé, la maniabilité du véhicule lors de manoeuvres à basse vitesse est améliorée et l'amplitude de l'action du conducteur sur le volant est réduite.

Dans une seconde plage de vitesses du véhicule supérieures au seuil déjà défini et correspondant à une conduite à grande vitesse, le procédé réalise un carrossage des roues arrière Rₐᵣ du véhicule en phase avec le braquage des deux roues avant Rₐᵥ, dans le but de stabiliser le véhicule en dynamique en limitant la réactivité du véhicule. Cela signifie que, pour un braquage des roues avant positif vers la droite, la roue arrière intérieure au virage, soit la droite, est carrossée positivement pendant que la roue arrière extérieure, soit la gauche, est carrossée négativement, comme le montrent les schémas des vues de dessus et arrière respectivement des figures 2a et 2b.

De plus, l'angle de carrossage γ_{AR} des roues arrière remplit deux critères en fonction de la vitesse longitudinale du véhicule et de l'angle au volant.

Tout d'abord, à vitesse longitudinale Vₓ fixée et pour de faibles valeurs de l'angle au volant αᵥ, en dessous d'un seuil αₛ fixé par les caractéristiques physiques du véhicule, telles que son empattement ou sa masse notamment, l'angle γ_{AR} de carrossage arrière croît avec l'angle au volant, afin d'améliorer la stabilité dynamique du véhicule. Par contre, au-delà de ce seuil d'angle au volant αₛ, pouvant correspondre à une situation d'urgence pour éviter un obstacle, l'angle γ_{AR} de carrossage arrière en phase décroît pendant que l'angle au volant αᵥ croît pour rendre au véhicule sa réactivité.

Ensuite, alors que l'angle volant αᵥ est fixé, l'angle γ_{AR} de carrossage arrière augmente lorsque la vitesse longitudinale Vₓ du véhicule augmente, mais le seuil αₛ correspondant à un point d'inflexion de la courbe de l'angle γ_{AR} diminue afin de rendre de la mobilité au véhicule pour les grandes amplitudes d'angles, à grande vitesse, correspondant à des situations d'urgence, de type évitement.

Cela permet de mieux répondre aux conditions de roulage du véhicule en déplaçant le compromis entre stabilité et vivacité. Le véhicule est bien stabilisé lors des manoeuvres d'évitement à vitesse élevée.

Les variations de l'angle γ_{AR} de carrossage des roues arrière d'un véhicule en fonction de l'angle αᵥ au volant pour trois valeurs différentes V₄, V₅ et V₆ de la valeur de la vitesse longitudinale du véhicule, dans le sens croissant, apparaissent sur le cadran C₂ de la figure 3 correspondant à un braquage des roues avant et un carrossage des roues arrière en phase. En dessous du seuil αₛ d'angle au volant, l'angle γ_{AR} augmente avec l'angle αᵥ pour stabiliser le véhicule, alors qu'il diminue pour des valeurs d'angle supérieurs au seuil αₛ pour lui rendre sa réactivité.

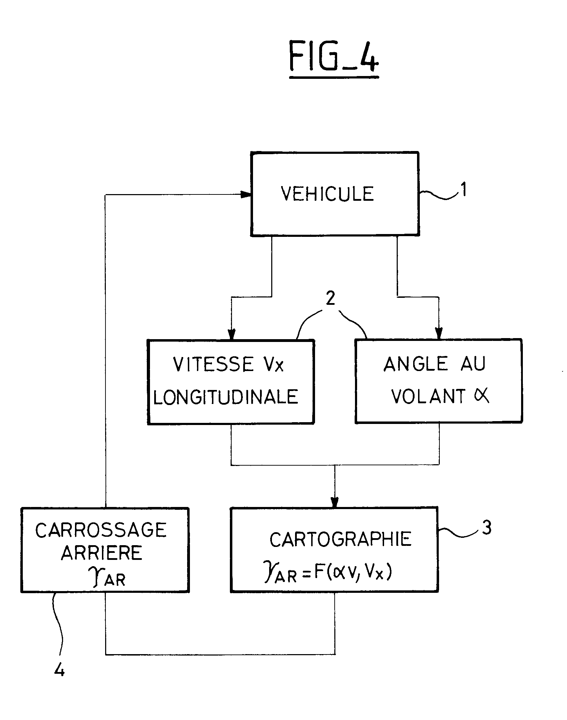

La figure 4 est un schéma simplifié d'un dispositif embarqué de mise en oeuvre du procédé de carrossage actif des roues arrière d'un véhicule 1, réalisé en boucle ouverte à l'aide d'une cartographie de l'angle de carrossage arrière γ_{AR} en fonction de la vitesse longitudinale Vₓ du véhicule et de l'angle au volant αᵥ, cartographie établie sur banc d'essai par exemple et mémorisée dans un calculateur électronique de contrôle 3. Ce calculateur reçoit des informations sur la vitesse du véhicule d'une part et sur le braquage des roues directrices avant par l'intermédiaire de la position du volant imposée par le conducteur d'autre part, délivrées par des capteurs existants 2, dans le but de piloter un actionneur 4 des roues arrière à l'aide d'une consigne extraite de ladite cartographie mémorisée. Ce calculateur peut être déjà implanté sur le véhicule, comme celui contrôlant l'injection, l'aide au freinage ABS, ou bien être nouveau, et la cartographie peut être fonction de plusieurs paramètres

Selon une variante de l'invention, le procédé de carrossage actif peut être réalisé à l'aide d'une cartographie de l'angle γ_{AR} à plusieurs dimensions en fonction d'autres paramètres de l'évolution dynamique du véhicule tels que la vitesse de rotation du volant ou l'adhérence au sol du pneumatique équipant les roues. De même, la pression de gonflage des pneus peut faire varier l'angle de carrossage, car il est préférable de moins carrosser quand les pneus sont sous gonflés.

Grâce à l'invention, qui pilote en temps réel le carrossage des roues arrière, la maniabilité du véhicule à basse vitesse, notamment lors de manoeuvres, et sa stabilité à haute vitesse sont accrues, sans surcoût dû à l'adjonction de nouveaux moyens comme des capteurs.

## Revendications

1. Procédé de contrôle de l'angle de carrossage des roues arrière d'un véhicule automobile équipé d'au moins quatre roues, deux roues directrices étant montées sur l'essieu avant, qui est réalisé en boucle ouverte à l'aide d'une cartographie dépendant au moins des valeurs instantanées de la vitesse longitudinale du véhicule et de l'angle du volant représentatif du braquage des roues avant et tel que les roues de l'essieu arrière sont carrossées en pairallèle, soit une des roues est carrossée positivement en même temps que l'autre roue est carrossée négativement, **caractérisé en ce que**, dans une plage de vitesses longitudinales du véhicule (A) inférieures à un seuil défini correspondant à une conduite à basse vitesse, il consiste en un carrossage des roues arrière (Rₐᵣ) en opposition de phase avec le braquage des roues avant (Rₐᵥ), réduisant ainsi le rayon de braquage du véhicule et générant un couple maximal aux roues, réalisé de telle sorte que :
- à vitesse longitudinale (Vₓ) du véhicule fixée, il consiste à faire croître l'angle de carrossage arrière (γ_{AR}) en valeur absolue, en même temps que l'angle au volant (αᵥ) ;
- à angle au volant (αᵥ) fixé, il consiste à faire diminuer l'angle de carrossage arrière (γ_{AR}) en valeur absollue, quand la vitesse longitudinale (Vₓ) du véhicule augmente.

2. Procédé de contrôle de l'angle de carrossage des roues arrière d'un véhicule automobile équipé d'au moins quatre roues, deux roues directrices étant montées sur l'essieu avant, qui est réalisé en boucle ouverte à l'aide d'une cartographie dépendant au moins des valeurs instantanées de la vitesse longitudinale du véhicule et de l'angle du volant représentatif du braquage des roues avant et tel que les roues de l'essieu arrière sont carrossées en parallèle, soit une des roues est carrossée positivement en même temps que l'autre roue est carrossée négativement, **caractérisé en ce que**, pour une vitesse longitudinale (Vₓ) du véhicule supérieure à un seuil prédéfini, il consiste en un carrossage des roues arrière en phase avec le braquage des deux roues avant, stabilisant ainsi le véhicule en dynamique, réalisé de telle sorte que :
- à vitesse longitudinale (Vₓ) du véhicule fixée, et pour un angle au volant (αᵥ) inférieur à un seuil (αᵥ) fixé par les caractéristiques physiques du véhicule, il consiste à faire croître l'angle de carrossage arrière (γ_{AR}) en même temps que la valeur de l'angle au volant (αᵥ) ; et pour un angle au volant (αᵥ) supérieur audit seuil (αₛ), à faire décroître ledit angle de carrossage arrière pendant que la valeur de l'angle au volant croît ;
- à angle au volant (αᵥ) fixé, il consiste à faire croître l'angle de carrossage arrière (γ_{AR}) quand la vitesse longitudinale (Vₓ) du véhicule augmente, alors que le seuil (αₛ) correspondant à un point d'inflexion de la courbe de l'angle (γ_{AR}) diminue.

3. Procédé de contrôle selon l'une des revendications 1 ou 2, **caractérisé en ce qu'**il est réalisé à l'aide d'une cartographie de l'angle (γ_{AR}) à plusieurs dimensions en fonction de paramètres de l'évolution dynamique du véhicule tels que la vitesse de rotation du volant, l'adhérence au sol du pneumatique équipant les roues ou la pression de gonflage des pneus.

4. Dispositif de mise en oeuvre du procédé de contrôle selon l'une des revendications 1 à 3, **caractérisé en ce qu'**il est embarqué sur le véhicule (1) et comprend un calculateur électronique de contrôle (3), qui reçoit des informations sur le braquage des roues directrices avant (Rₐᵥ) d'une part, par l'intermédiaire de l'angle au volant (αᵥ), et sur la vitesse longitudinale (Vₓ) du véhicule d'autre part, délivrées par des capteurs existants (2), qui a en mémoire une cartographie de l'angle (γ_{AR}) à plusieurs dimensions en fonction de paramètres de l'évolution dynamique du véhicule et qui pilote un actionneur (4) des roues arrière (Rₐᵣ) à l'aide d'une consigne extraite de ladite cartographie mémorisée.
